# EUROPEAN PATENT APPLICATION

(11) **EP 3 078 578 A1**
(43) Date of publication of application: **12.10.2016**
(21) Application number: 15163054.8
(22) Date of filing: 09.04.2015
(51) Int. Cl.: B62D 25/20

(54) **A FLOOR PANEL SYSTEM**

(71) Applicant: Modul-System HH AB, 431 22 Mölndal (SE)
(72) Inventor: Carlsson, Anders, 422 50 HISINGS BACKA (SE); Thelander, Peter, 312 34 LAHOLM (SE)
(74) Representative: Awapatent AB

(57) **Abstract**

The present invention relates to a floor panel system (10) for use in a back space or cargo space of a service vehicle (1), wherein said floor panel system (10) comprises a first floor panel (5, 5a) and a second floor panel (5, 5b), and said first floor panel (5, 5a) is adapted to be connected to said second floor panel (5, 5b) during use, each of said first and said second floor panel comprises: a top surface which is located in a plane (P), at least two lateral sides (26, 25), wherein said first and said second floor panels are characterized by a first locking portion (21) at said first lateral side (26) of said floor panel, said first locking portion (21) being provided with a locking element (32), a second locking portion (22) adjacent to said first locking portion (21) at said first lateral side (26) of said floor panel (5, 5a, 5b) a third locking portion (23) at said second lateral side (25) of said floor panel (5, 5a, 5b), said third locking portion (23) comprises a locking groove (35), a fourth locking portion (24) adjacent to said third locking portion (23), at said second lateral side (25) of said floor panel (5, 5a, 5b), and said locking element (32) of said first locking portion (21) of said first floor panel (5, 5a) being adapted to engage with the locking groove (35) of said third locking portion (23) of said second floor panel (5, 5b) during use, wherein said first and said second floor panels (5, 5a, 5b) are interlocked to each other along a first axis (41), which is parallel to said plane (P), and said first locking portion (21) of said first floor panel (5, 5a) being further configured to overlap said third locking portion (23) of said second floor panel (5, 5b) during use, and said second locking portion (22) of said first floor panel (5, 5a) being further configured to overlap said fourth locking portion (24) of said second floor panel (5, 5a) during use, wherein said first and said second floor panels (5, 5a, 5b) are interlocked to each other along a second axis (42), which is perpendicular to said plane (P).

## Description

### Field of the invention

The present invention relates to a floor panel system adapted to be arranged on an inner floor in a cargo or back space of a service vehicle.

### Technical background

It is common practise in the art of service vehicles to equip a cargo space or a back space of an automotive vehicle with for example cupboards, tool holders, shelves or other module units. This is usually made in a separate step after the vehicle has been manufactured, i.e. the equipping of the vehicle in question is made separately from the manufacturing. Before the vehicle is equipped with specialised equipment, usually the cargo space of the vehicle is provided with a floor, usually made of wood, but the floor might also be made of for example an artificial, plastic material. The floor is usually loosely placed on the floor or fastened to the floor of the cargo space by fasteners, for example, screws which are screwed into the underlying floor or connected to a fastener, for example a ring fastener which is permanently installed in the cargo or back space of the service vehicle. This floor functions as a good support to work, stand and walk upon and is also used as an anchor plate for the module units.

Usually a floor is individually made for a specific vehicle model, i.e. the floor is adapted to the length and the width of the vehicle.

One example of such a floor system is disclosed in EP1894774, of the present applicant, which discloses a load securing system, for a cargo space in an automotive vehicle. At least two rails are fixable along the cargo space, wherein one of said rails is held by one or more fixing means connectable to respective ring fasteners of the service vehicle and the other rail is held as well by one or more fixing means connectable to respective ring fasteners, and said rails are connected to each other by a bridging element in a space between said rails.

However, there is still a need for a more flexible solution which can be used for all kind of back spaces and cargo spaces of a service vehicle and which is easy and quick to install, safe and yet flexible in order to enable securing various sizes and different shapes of module units.

### Summary of the Invention

The object of the present invention is to provide a floor system that overcomes the above issues. The present disclosure relates to a floor panel system for use in a back space or cargo space of a service vehicle, wherein the floor panel system comprises a first floor panel and a second floor panel, and the first floor panel is adapted to be connected to the second floor panel during use, each of the first and the second floor panel comprises: a top surface which is located in a plane, at least two lateral sides, wherein the first and the second floor panels are characterized by a first locking portion at the first lateral side of the floor panel, the first locking portion being provided with a locking element, a second locking portion adjacent to the first locking portion at the first lateral side of the floor panel; a third locking portion at the second lateral side of the floor panel, the third locking portion comprises a locking groove; a fourth locking portion adjacent to the third locking portion, at the second lateral side of the floor panel; and the locking element of the first locking portion of the first floor panel being adapted to engage with the locking groove of the third locking portion of the second floor panel during use, wherein the first and the second floor panels are interlocked to each other along a first axis, which is parallel to the plane; and the first locking portion of the first floor panel being further configured to overlap the third locking portion of the second floor panel during use; and the second locking portion of the first floor panel being further configured to overlap the fourth locking portion of the second floor panel during use, wherein said first and said second floor panels are interlocked along a second axis, which is perpendicular to the plane, to each other. Having a floor panel system comprising four locking portions, arranged on two lateral sides, adapted to interlock to each other is advantageous since it enables two floor panels to be interconnected to each other. The interconnecting of floor panels may be done in multiple directions as a result of how the locking portions are designed. This creates a safe, flexible and easy to install floor panel system. The first locking portion comprises a locking element adapted to engage a locking groove of a third locking portion enables two floor panels to be interlocked along a first axis. The first axis being an axis in the plane of the floor panels, preferably extending in a direction essentially perpendicular to said first lateral side of said floor panels. The overlapping of first and third locking portions, as well as second and fourth locking portions, of the first and second floor panel, interlocks the floor panels along a second axis. The second axis being normal to the plane of the floor panels. Along an axis may also be described as in one or both directions defined by an axis. The floor panels may be prevented from moving in relation to each other in also a second direction. This is advantageous and increases the safety of the floor system when installed and used. The fourth locking portions may be designed as having a locking element according to the first locking portion. This help increase the interlocking of floor panels in the first direction. The third and second locking portion may be designed as both having a locking groove. This help increase the interlocking of floor panels in the first direction. The floor panels are essentially rectangular or square and the number of locking portions may be adapted to the size of the floor panels. The floor panel is preferably made from a plastic polymer, wood or laminated wood. According to at least one exemplary embodiment of the present invention the first and the second lateral sides of at least one floor panel are arranged on opposite sides of the floor panel. This enables floor panels to be interconnected on two opposing sides, enabling a floor to be built, extending in one direction. The first axis is preferably in this direction, i.e. in the direction of the two opposite sides. The locking portions may be described as having a shape like a tab, protruding outwardly from a lateral side of the floor panel. It may extend for a part of the length of a lateral side of the floor panel, such that a locking portion may essentially not overlap adjacent locking members of a floor panel.

According to at least one exemplary embodiment of the present invention the first and the fourth locking portions on the first and the second floor panels are arranged close to the top surface and the second and the third locking portions on the first and the second floor panels are arranged close to a bottom surface of the floor panel, arranged parallel and at distance to the top surface of the floor panel. It is advantageous to have the first and the fourth locking portions arranged close to the top surface since the first and fourth locking portions may form part of the surface of the floor panel. They may thereby be seen as an extension of the surface forming an overhang projection outwardly from the floor surface. Having the second and third locking portions arranged close to the bottom surface of the floor panel is advantageous since the locking portions thereby may form part of the bottom surface of the floor panel. When a floor is in use the locking element will be in contact with the floored surface, the surface covered by the floor system according to the present invention. A force acting on the second and third locking portion will then be directly transferred to the surface to be floored. This enables the second and third locking portions to be manufactured requiring less material, being more cost efficient solution. By having the first and the third locking portion at different levels on their respective lateral sides makes it possible for the first and the third portion to overlap each other. The same applies for the second and the fourth locking portion.

According to at least one exemplary embodiment of the present invention the second and the third locking portions on the first and the second floor panels are arranged close to said top surface and the first and the fourth locking portions on the first and the second floor panels are arranged close to a bottom surface of the floor panel, arranged parallel and at distance to the top surface of the floor panel. It is also possible to change the placement of the first and fourth locking portions as well as the second and third locking portions. The first and fourth locking portions may be arranged close to the bottom surface of the floor panel extending parallel and at a distance to the top surface. The second and third locking portions may be arranged close to the bottom surface of the floor panel extending parallel and at a distance to the top surface.

According to at least one exemplary embodiment of the present invention at least said first floor panel comprises two first locking portions at the first lateral side, and the second locking portion is arranged between said two first locking portions, wherein the second locking portion defines a recess which extends from the top surface or the bottom surface to the second locking portion between the two first locking portions, wherein the recess being adapted to receive the fourth locking portion of the second floor panel interlocking the first and second floor panels to each other, along a third axis perpendicular to the first axis and the second axis. Having a recess between two outwardly protruding first locking portions on a first floor panel is advantageous. The recess on a first floor panel is adapted to receive a protruding locking portion of a second floor panel. When two floor panel are interconnected the interaction between the fourth locking portion and the recess helps with interlocking the two floor panels along the third axis. The third axis may also be described as being an axis extending along a lateral side of the floor panel, a side comprising locking portions. The second locking portion defines a recess which extends from the top surface when said second locking portion is arranged adjacent the bottom area. The second locking portion defines a recess which extends from the bottom surface when said second locking portion is arranged adjacent the top surface.

According to at least one exemplary embodiment of the present invention at least said first floor panel comprises two fourth locking portions at the second lateral side, and the third locking portion is arranged between the two fourth locking portions wherein the third locking portion defines a recess which extends from said top surface or the bottom surface to the third locking portion between the two fourth locking portions, wherein the recess being adapted to receive the first locking portion of the first floor panel interlocking the first and second floor panels to each other, along a third axis perpendicular to the first axis and the second axis. As described above such a recess may also be comprised of two fourth locking portions arranged on either side of a third locking portion. Having a recess between two outwardly protruding fourth locking portions on a first floor panel is advantageous since the recess on a first floor panel is adapted to receive a protruding locking portion of a second floor panel. When two floor panels are interlocked the interaction between a first locking portion of a first floor panel and a recess, the recess helps with interlocking the two floor panels along the third axis. The third axis may also be described as being an axis extending along a lateral side of the floor panel, a side comprising locking portions. The third locking portion defines a recess which extends from the top surface when said third locking portion is arranged adjacent the bottom area. The third locking portion defines a recess which extends from the bottom surface when said third locking portion is arranged adjacent the top surface.

According to at least one exemplary embodiment of the present invention at least said first floor panel comprises two second locking portions at the first lateral side, and the first locking portion is arranged between the two second locking portions, wherein the first locking portion defines a recess, which extends from the top surface or the bottom surface to the first locking portion between the two second locking portions, wherein the recess being adapted to receive the third locking portion of the second floor panel interlocking the first and second floor panels to each other, along a third axis perpendicular to the first axis and said second axis. Having two second locking portions arranged with a first locking portion in between helps to interlock a first floor panel to a second floor panel along a third axis. The recess, defined by the two second locking portions together with the first locking portion, help interlocking of the floor panels by receiving a third locking portion. The first locking portion defines a recess which extends from the top surface when said first locking portion is arranged adjacent the bottom area. The first locking portion defines a recess which extends from the bottom surface when said first locking portion is arranged adjacent the top surface.

According to at least one exemplary embodiment of the present invention at least said first floor panel comprises two third locking portions at the second lateral side, and the fourth locking portion is arranged between the two third locking portions, wherein the fourth locking portion defines a recess, which extends from the top surface or the bottom portion to the fourth locking portion between the two third locking portions, wherein the recess being adapted to be receive the second locking portion of the second floor panel interlocking the first and second floor panels to each other, along a third axis perpendicular to the first axis and the second axis. As earlier described for second locking portions with a first locking portion arranged in between the same arrangement can be made for the third locking portions and fourth locking portions. The arrangement helps to interlock a first floor panel to a second floor panel along a third axis. The recess, defined by the two third locking portions together with the fourth locking portion, help interlocking of the floor panels. The fourth locking portion defines a recess which extends from the top surface when said fourth locking portion is arranged adjacent the bottom area. The fourth locking portion defines a recess which extends from the bottom surface when said third locking portion is arranged adjacent the top surface.

According to at least one exemplary embodiment of the present invention the first and second locking portions of at least one floor panel are alternately disposed along the first lateral side of the floor panel and wherein several third and fourth locking portions are alternately disposed along the second lateral side of said floor panel. Alternately disposing first and second locking portions along a first lateral side increases the interlocking effect along the third axis. It also creates a safer and more secure interlocking of floor panels by distributing the locking of a first floor panel to a second floor panel.

According to at least one exemplary embodiment of the present invention the locking element on the first locking portion of at least one floor panel is a protrusion which extends in a direction towards the bottom surface of the floor panel. When two floor panels are interconnected, the first locking element, of a first locking portion, of a first floor panel, engage with a locking groove, of a third locking portion, of a second floor panel, and prevent movement along the first axis. This interlocks inter-relative movement between the first and second floor panel along the first axis.

According to at least one exemplary embodiment of the present invention the protrusion has an outer shape which is matching with the shape of the locking groove it is adapted to engage with and the protrusion has a cross-section which is wedge shaped. Having the cross-section being wedge shaped helps when two floor panels are being installed, or being interconnected. Alternatives to having a wedge shaped cross-section may be having a round, semi-circle-shaped or a square-and-chamfered cross-section.

According to at least one exemplary embodiment of the present invention the looking groove of at least the second floor panel comprises stop surfaces which the locking element of the first floor panel abuts during use and interlocks the first and second floor panels to each other, along a third axis perpendicular to the first axis and the second axis. The stop surfaces, of the locking grooves, of the third locking portions engage the locking element of the first locking portions during use along a third axis. The locking elements and locking grooves thereby interlock floor panels along two axes.

According to at least one exemplary embodiment of the present invention the first and the second locking portions of at least one floor panel are arranged at a distance from each other or the third and the fourth locking portions arranged at a distance from each other.

According to at least one exemplary embodiment of the present invention said first and said second locking portion of at least one floor panel are connected to each other at their adjacent sides and/or said third and said fourth locking portions are connected to each other at their adjacent sides. Connecting the first and second locking portions increases the interlocking strength of the present invention. The same result may be achieved if the third and fourth locking portions are connected at the adjacent sides. Each locking portion will thereby be connected to adjacent locking portions.

According to at least one exemplary embodiment of the present invention each floor element is molded from one material. Having the floor panels molded from one material is advantageous since a floor panel may be made in one step. The floor panel may be produced in essentially one manufacturing step. This is often more cost efficient than having multiple manufacturing steps for producing a floor panel. Having the floor panel made in one material may also reduce the possibility for material weaknesses where multiple material would otherwise be joined together to form a floor panel. It further helps when a floor panel is recycled at the end of the product life of the floor panel.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief Description of Drawings

The above, as well as additional objects, features and advantages of the present disclosure, will be better understood through the following illustrative and non-limiting detailed description of exemplary embodiments of the present disclosure, with reference to the appended drawings, where the same reference numerals will be used for similar elements, wherein:
Fig. 1 shows a back space of a cargo vehicle having a floor panel system accordingto the present invention.
Fig. 2 shows an embodiment of a floor panel of the floor panel system in Fig. 1 in a perspective view from above
Fig. 3 shows the floor panel in Fig. 2 in a perspective view from below.
Fig. 4 shows a floor panel system comprising of four identical floor panels, which are connected to each other. Each floor panel being a floor panel shown in Fig. 2 and 3.
Fig. 5a shows an enlarged view of the area A in Fig 6b with a locking element according to a first embodiment.
Fig. 5b shows a second embodiment of the locking element in Fig. 5a.
Fig. 5c shows a third embodiment of the locking element in Fig. 5a.
Fig. 6A-B shows cross sectional views at the cross section A-A in Fig. 4 of the step of interconnecting two floor panels.

All the figures are highly schematic, not necessarily to scale, and they show only parts which are necessary in order to elucidate the invention, other parts being omitted or merely suggested.

### Detailed Description of the Invention

The present invention will now be described in more detail with the accompanying drawings.

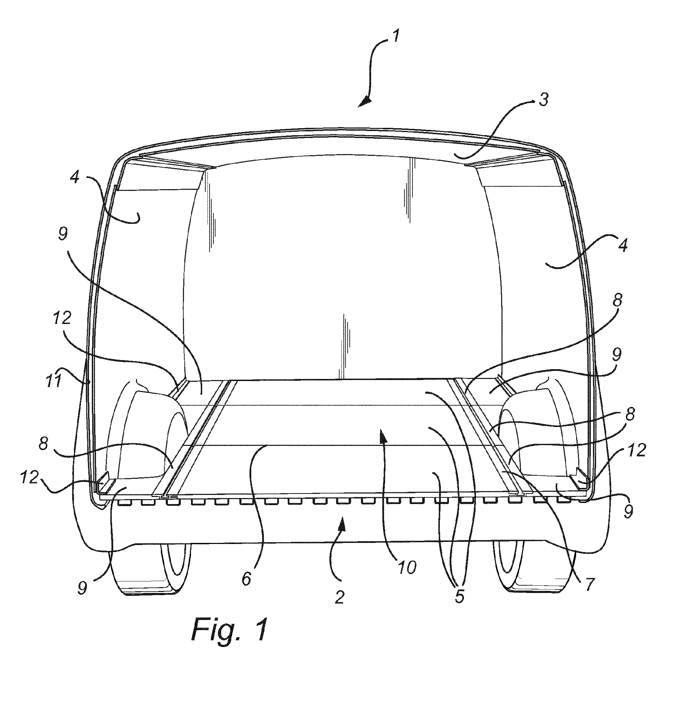

Fig.1 shows the back space or cargo space of a service vehicle 1. The back space or cargo space of the service vehicle 1 is comprised of a floor 2, a roof 3, sidewalls 4 and a trunk or boot door (not visible) at the back. When in use the back space or cargo space may be fitted with storing equipment as well as interior or inner panels (not visible). These interior panels may also be used for fastening the storing equipment or for fastening tools or the like. The cargo or back space is fitted with an interior floor 10, i.e. a floor panel system 10, comprised of floor panels 5 arranged on top of, and cover, the back space or cargo space floor 2. The floor panels 5 are, interconnected to each other and arranged in the forward driving direction of the vehicle 1. The floor panels 5 each have a rectangular shape. The floor panels 5 are interconnected along their longest side 6, to each other, and by their shorter sides 7 to fastening rails 8. The figure shows a total of six fastening rails 8, wherein each floor panel 5 on each short side 7 is fastened to a fastening rail 8. Each floor panel 5 can be seen as being arranged between and fastened to two of these fastening rails 8. The rails 8 are fastened to the floor 2 of the vehicle by fastening means such as adhesives or screws and bolts (not shown). Depending on the width and length of the back space or cargo space to be floored, as well as the dimension of each floor panel 5, a different number of panels 5 may be needed to cover the floor 2. The rails 8 holds the floor in place as well as serve as securing means (not shown in Fig. 1) for fastening tools, equipment and interior storage elements to the back space or cargo space of the service vehicle 1. Floor elements 9 are arranged on the sides of the back space or cargo space of the vehicle 1, adjacent the sidewalls 11, and they may be made from floor panels 5 cut into a shape, for fitting in a specific vehicle. This means that one type of floor panel 5 may be used for flooring the center part of the back space or cargo space of a service vehicle 1. The floor elements 9 on the side may be made model specific i.e. be made to fit on only a specific vehicle model. Fig.1 further shows angular fastening elements 12 for fastening of the floor elements 9 to an adjacent sidewall 11.

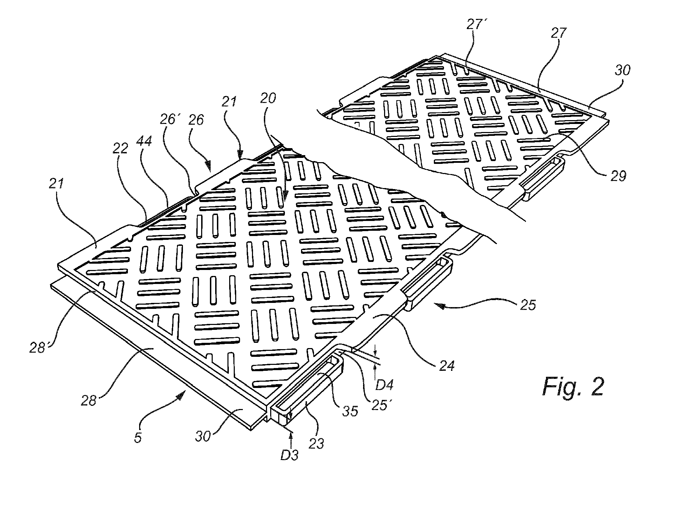

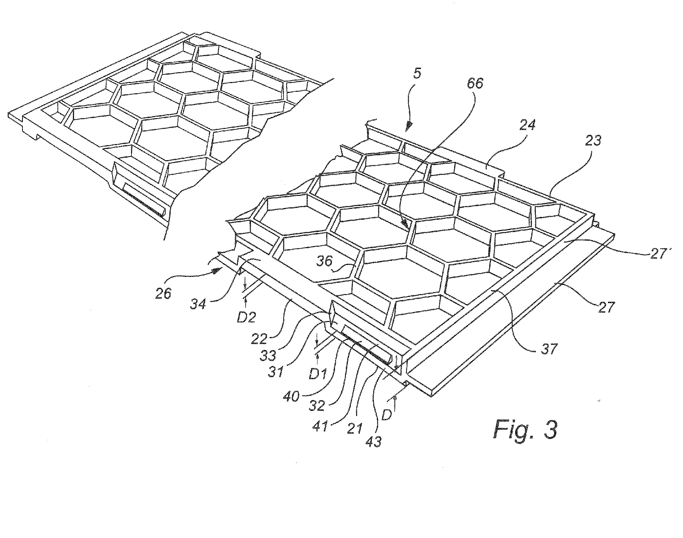

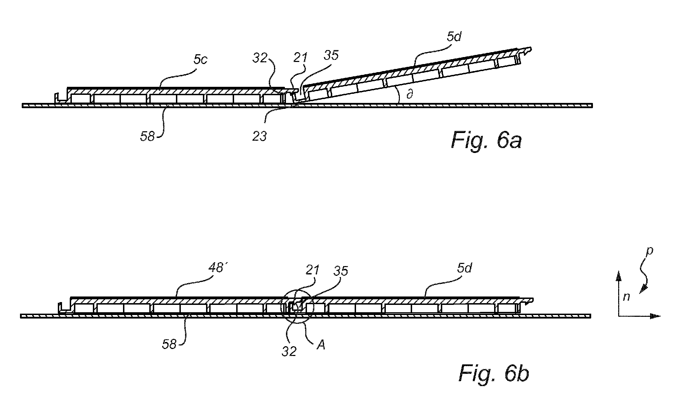

Fig. 2 and Fig. 3 show perspective views of one of the floor panels 5 in Fig. 1, and Fig. 2 and Fig. 3 will hence be described together. All the floor panels 5 in Fig. 1 are identical and will hence not be described further. The floor panel 5 has a top surface 20 which is located in a plane P (see Fig. 6b) having a normal, n, pointing away from the floor 2 of the back space or cargo space of a service vehicle 1 to be covered by the floor panel 5. The top surface 20 of the floor panel 5 further shows groups of anti-slippage elements 29 forming part of the top surface 20 of the floor panel 5. These help with increasing the friction of the surface 20. The floor panel 5 is a rectangular floor panel. It may however be square shaped, or have any other suitable shape. It comprises a first and a second lateral side 25, 26, which are arranged opposite each other. The floor panel 5 further comprises a third and a fourth lateral side 27, 28 which are arranged opposite each other. On the third and the fourth lateral side 27, 28 are two lateral sidewalls 27', 28' which each comprises rail fastening portions 30, protruding outwardly from the respective lateral sidewall 27', 28'. These are arranged to be used for fastening the floor panel 5 to fastening rails 8, shown in Fig. 1. The rail fastening portions 30, have a rectangular cross section and protrudes from a middle portion of the lateral sidewalls 27', 28'. At the first and the second lateral sides 25, 26 are locking portions 21, 22, 23, 24 arranged. On the first lateral side 26 is a first lateral sidewall 26'. A first locking portion 21 protrudes outwardly from said first lateral sidewall 26' of the floor panel 5. Adjacent the first locking portion 21 is a second locking portion 22. Adjacent the second locking portion 22 is a second first locking portion 21. The second locking portion 22 protrudes outwardly from the first lateral sidewall 26' of the floor panel 5. The locking portions 21, 22 are arranged in an alternate pattern so that adjacent a first locking portion 21 is a second locking portion 22. The number of first and second locking portions 21, 22 depends on the size of the floor panel 5 as well as the size of the locking portions 21, 22.
On the second lateral side 25 is a second lateral sidewall 25'. A third locking portion 23 protrudes outwardly from the second lateral sidewall 25'. The third locking portion 23 is arranged oppositely of the first locking portion 21. A fourth locking portion 24 protrudes outwardly from the second lateral sidewall 25' adjacent the third locking portion 23. The first and second locking portions 21, 22, of one side are arranged to interlock with the third and fourth locking portion 23, 24 of an opposing lateral sidewall 25' of a second floor panel, arranged to be interconnected two floor panels when in use. As such some or all design elements of the first and fourth locking portions 21, 24 may be the same. The same may be said about the second and third locking portions 22 and 23. The first locking portion 21 is comprised of a first protrusion, protruding outwardly from the floor panel. The first locking portion 21 protrudes at a top portion of the first lateral sidewall 25' adjacent the top surface 20 of the floor panel 5. As such the first locking portion 21 may be seen as being an extension of the top surface 20 of the floor panel 5. The first protrusion 21 may also be described as an overhang extending from the top surface 20 of the floor panel 5. The first locking portion 21 has a thickness D1 smaller than the thickness D of the whole floor panel 5.

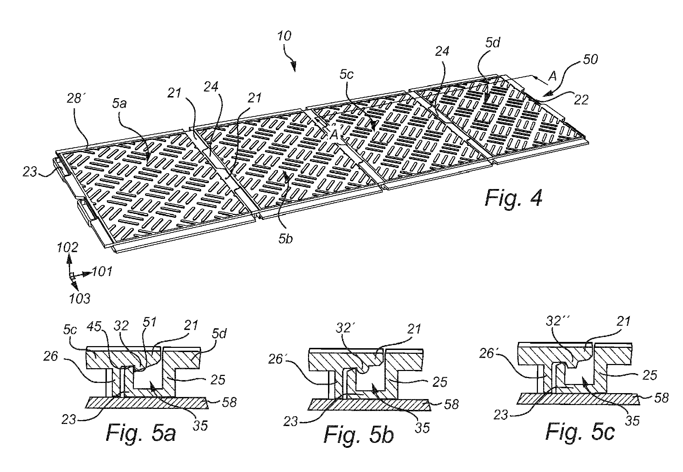

On the underside surface 31 of the first locking portion 21, the underside surface 31 being the surface opposite the top surface 20 of the floor panel 5, is arranged a locking element 32. The locking element 32 comprises of a protrusion, protruding from the underside surface 31 of the first locking portion 21 in a direction from the top surface 20 towards the underside surface 31 of the floor panel 5. The locking element 32 has the shape of a protrusion extending, along a direction of the first lateral sidewall 26', from said underside surface. The locking element 32 has a front edge 40 and a back edge 41. The back edge 41 is adjacent, but at a distance from the first lateral sidewall 26' of the floor panel 5 and the front edge 40 is adjacent an outer edge 43 of the locking portion 21. The front and back edge 40, 41 are parallel with the outer edge 43 of the first locking portion 21. The locking element 32 extends along about half of the length of how long the first locking portion 21 extends in a direction along the lateral sidewall 26'. The locking element 32 may however extend along essentially the whole length of how long the first locking portion 21 extends in a direction along the lateral sidewall 26'. The back edge 41 of the first locking element 32 is arranged on a distance from the lateral sidewall 26' of about half the distance the first locking portion 21 extends from the lateral sidewall 26'as can be seen in fig. 5A which show a cross sectional view of the first locking portion 21.

The second locking portion 22 of the floor panel comprises a protrusion, protruding from the lower portion of the first lateral sidewall 26' of the floor panel 5. The first and second locking portion 21, 22 are joined together along a border 33, or stop surfaces, where a first locking portion 21 and an adjacent alternately arranged second locking portion 22 meet. This may also be described as that the first and the second locking portions 21, 22 are connected to each other at their adjacent sides. This helps increasing the strength of a floor panel 5 as well as increase the strength of the connection between two interconnected floor panels. The thickness D2 of the second locking portion 22 together with the thickness D1 of the first locking portion 21 is essentially the same as the thickness D of the floor panel 5. The lower surface 34 of the second locking portion 22 will be resting on the floor 2 of the cargo space or back space of a service vehicle 1 when in use. This helps with increasing the stability and rigidity of the connection between two connected floor panels 5. The ratio between the thickness D1, D2 of the first and second locking portion 21, 22 may also differ. The thickness D1 of a first locking portion 21 may be larger than the thickness D2 of a second locking portion 22 as well as vice versa. The same goes for the ratio between the thickness of a third and fourth locking portion D3, D4 shown in Fig. 2. The second locking portion 22 has a recess 44, in a direction from the top surface 20 towards the lower surface 34 of the second locking portion 22. The recess 44 may go through the whole of the second locking portion 22. This creates a hole having an extended elongated shape, in the second locking portion 22. Or the recess 44 may go through only a part of the protrusion of the second locking portion 22 leaving a bottom portion of the recess. Leaving a bottom portion of the recess increases the rigidity of the locking portion 22. This will in turn improve the interlocking security of a first floor panel to a second floor panel.

The third locking portion 23, arranged on the opposite side of the first locking portion 21, on the second lateral side 25, comprises a protrusion, protruding outwardly from the second lateral sidewall 25'. The third locking portion 23 further comprises a recess 35 similar to the recess of the second locking portion 22 described above. This recess is a locking groove 35 having a locking or engaging function when a first floor panel is interconnected to a second floor panel. When two floor panels 5 are interconnected the locking groove 35 of the third locking portion 23 is engaging the locking element 32 of the first locking portion 21 preventing movement between two interconnected floor panels 5 (see Fig. 5a -5c, and Fig. 6a-6b). The upper outer edge 45 (see Fig. 5a) of the third locking portion 23 is chamfered to make interconnecting or joining of two floor panels 5 simplified. The third locking portion 23 of the floor panel 5 comprises a protrusion, protruding from the lower portion of the second lateral sidewall 25' of the floor panel 5. The third locking portion 23 further may have the same thickness D3 as the thickness D2 of the second locking portion 22. Fig 3 shows that the third locking portion 23 is not joined together along the border where adjacent locking portions are alternately arranged as is the case with the first and second locking portions 21, 22. The fourth locking portion 24 is arranged adjacent the third locking portion 23 along the second lateral sidewall 25' of the floor panel 5. The fourth locking portion 24 comprises a protrusion, protruding outwardly from a top portion of the second lateral sidewall 25' adjacent the top surface 20 of the floor panel. As such the fourth locking portion 24 may be seen as being an extension of the top surface 20 of the floor panel 5. The fourth locking portion 24 may also be described as an overhang extending from the top surface 20 of the floor panel 5. The shape of the fourth locking portion 24 largely corresponds to the shape of the first locking portion 21. The fourth locking portion 24 however does not have a locking element 32 as in the case with the first locking portion 21. The third locking portion 23 may however be designed as also comprising a locking element 32 according to the first locking portion 21. The lower outer edge of the fourth locking 24 portion is chamfered (not shown). This simplifies joining the second and fourth locking portion 22, 24 when two floor panels 5 are interconnected. The number of locking portions 21, 22, 23, 24, of floor panel, depend on the size of the floor panels 5.

The underside of the floor panel 5 comprises a hexagonal pattern of protrusions 36 protruding from the underside of the body comprising the top surface 20 of the floor panel 5. This helps decreasing the weight of the floor panel 5 while maintaining strength and rigidity. The hexagonal pattern of protrusion 36 protrude up to the lower surface 37 of the lateral sidewalls 25', 26', 27', 28' and together they form a bottom surface. When a floor panel 5 is mounted on a flat surface 2 to be floored in a back space or cargo space of a service vehicle 1, the lower surface 37 of the lateral sidewalls 25', 26, 27', 28' as well as the lower surfaces of the hexagonal pattern of protrusions 36, i.e. the bottom surface, will be in contact with the surface 2 to be floored. The hexagonal pattern of protrusions 36 may obviously be replaced with other patterns of protrusions. The floor panel 5 may also be made solid from the top surface 20 of the floor panel 5 to the underside of the floor panel. The hexagonal pattern 36 may also be replaced with sound deadening means or dampening means dampening sound or vibrations (not shown). It should be noted that the first locking portion 21 alternatively may protrude at a lower portion of the first lateral sidewall 25' adjacent the bottom surface of the floor panel 5 and that the second locking portion 22 of the floor panel may then protrude from a top portion of the first lateral sidewall 26' of the floor panel 5 (not shown). The third locking portion 23 of the floor panel 5 will then protrude from the top portion of the second lateral sidewall 25' of the floor panel 5 and the fourth locking portion 24 will then protrude outwardly adjacent the bottom surface of the second lateral sidewall 25', and locking element 32 of the first locking portion 21 will then be protruding towards the top surface 20 of the floor panel, and the locking groove of the third locking portion 23 will be facing the locking element 32.

Fig. 4 shows one exemplary view of a floor panel system 10 comprised of a plurality of identical floor panels 5a, 5b, 5c, 5d, which each comprises a shape described in connection with Figs. 2 and 3 and the floor panels 5a, 5b, 5c, 5d are interconnected to form a floor. Shown in Fig. 4 are four floor panels 5a, 5b, 5c, 5d however more or fewer panels may be interconnected to form a floor comprising floor panels 5. When interconnected the floor panels 5a, 5b, 5c, 5d are hindered or prevented from moving in relation to each other along a first 101, second 102 and third axis 103. The axes are defined as being orthogonal to each other, as in each axis being perpendicular to each of the other two axes.

The first axis 101 is defined as being an axis parallel to the plane P, in which said top surface 20 is arranged, and in a direction where the floor panels 5a, 5b, 5c, 5d are being connected during use. The second axis 102 is defined as being parallel to the normal, n, of the top surface 20 of the floor panel 5. The third axis 103 is defined as an axis, orthogonal to the first and second axis 101, 102, or as the axis perpendicular to the plane P defined by the first and second axis 101, 102.

The locking element 32 (not shown in Fig. 4, see Fig. 3) of the first locking portion 21 of a first floor panel 5a engages the locking groove 35 (see Fig. 2) of a third locking portion 23 of the second floor panel 5b, locking movement along the first axis 101. The overlapping of the first locking portions 21 of a first floor panel 5a and third locking portions 23 of second floor panel 5b prevents movement between two interconnected floor panels 5a, 5b along the second axis 102. Between two first locking portions 21 arranged on the first lateral side 26 of the first floor panel 5a are second locking portions 22. In the space above second locking portions 22 are defined recesses 50 (see the fourth floor panel 5d) adapted to receive fourth locking portions 24 of the second floor panel 5b. The same can be said about fourth locking portions 24 arranged on either side of third locking portions 23. These recesses 50 prevent movement between two interconnected floor panels 5 along the third axis 103 defined above. If locking elements 32 of first locking portions 21 are made extending essentially the same length as the length the locking grooves 35 of third locking portions 23 extend, the engagement between locking elements 32 and locking grooves 35 may in addition to preventing movement between interconnected floor panels 5, along the first axis 101 also prevent movement along the third axis 103.

Further the interlocking between two adjacent floor panels 5a, 5b require no separate securing means and is therefore simple to install and cost efficient to produce. The floor panels 5 shown in figure 4 are made from plastic material. The third floor panel 5c is connected in a similar way to second floor panel 5b and the fourth floor panel 5d.

Fig. 5A shows an enlarged view of the connection between the third and the fourth floor panel 5c, 5d at cross section A-A in Fig. 4 The first locking portion 21 of the third floor panel 5c engaging the third locking portion 23 of the fourth floor panel 5d while resting on a floor 58 to be floored such as the floor 2 (see Fig. 1) of a cargo space or back space of a service vehicle 1. The third locking portion 23 protrudes from the lower part of the lateral sidewall 25'. The third locking portion 23 can be seen as having a U-shaped cross-section. The U-shape defines the locking groove 35. The locking element 32 has a triangle shape with a base surface 51 towards the lateral sidewall 26'. The base surface 51 is engaged with the locking groove 35 in the third locking portion 23 when the two floor panels, 5c, 5d are interconnected. Fig. 5B shows an alternative shape of the locking element 32' being a half-circle protruding from the underside of the first locking portion 21. Fig. 5C shows the locking element 32" being in the shape of a square cross section, protruding from the underside of the first locking portion 21. The square cross section has chamfered front and rear edges with chamfered corners.

Figs. 6a and b shows the steps of interconnecting the third and the fourth floor panel 5c, 5d in Fig. 4, it is shown at the cross-section A-A. The third floor panel 5c is placed on the inner floor 58 to be floored. A fourth floor panel 5d is supplied. The fourth floor panel 5d is lined up so that a first locking portion 21 is aligned with a third locking portion 23. The fourth floor panels 5d is held at an angle alfa while the fourth floor panel 5d is moved towards the third floor panel 5c. The third locking portion 23 is moved in relation to the locking element 32 of the first locking portion 21 so that the first locking element 32 is moved into the locking groove 35 of the third locking portion 23. Thereafter the fourth floor panel 5d may be lowered, reducing the angle alfa, until the fourth floor panel 5d is resting on the inner floor 58. When removing the fourth floor panel 5d, the sequency is made the other way around.

The disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A floor panel system (10) for use in a back space or cargo space of a service vehicle (1), wherein said floor panel system (10) comprises a first floor panel (5, 5a) and a second floor panel (5, 5b), and said first floor panel (5, 5a) is adapted to be connected to said second floor panel (5, 5b) during use, each of said first and said second floor panel comprises:
- a top surface which is located in a plane (P),
- at least two lateral sides (26, 25),
wherein said first and said second floor panels are **characterized by**
- a first locking portion (21) at said first lateral side (26) of said floor panel, said first locking portion (21) being provided with a locking element (32),
- a second locking portion (22) adjacent to said first locking portion (21) at said first lateral side (26) of said floor panel (5, 5a, 5b)
- a third locking portion (23) at said second lateral side (25) of said floor panel (5, 5a, 5b), said third locking portion (23) comprises a locking groove (35),
- a fourth locking portion (24) adjacent to said third locking portion (23), at said second lateral side (25) of said floor panel (5, 5a, 5b), and
said locking element (32) of said first locking portion (21) of said first floor panel (5, 5a) being adapted to engage with the locking groove (35) of said third locking portion (23) of said second floor panel (5, 5b) during use, wherein said first and said second floor panels (5, 5a, 5b) are interlocked to each other along a first axis (41), which is parallel to said plane (P), and said first locking portion (21) of said first floor panel (5, 5a) being further configured to overlap said third locking portion (23) of said second floor panel (5, 5b) during use, and
said second locking portion (22) of said first floor panel (5, 5a) being further configured to overlap said fourth locking portion (24) of said second floor panel (5, 5a) during use, wherein said first and said second floor panels (5, 5a, 5b) are interlocked to each other along a second axis (42), which is perpendicular to said plane (P).

2. A floor panel system (10) according to claim 1, wherein said first and said second lateral sides (26, 25) of at least one floor panel (5, 5a, 5b) are arranged on opposite sides of said floor panel (5, 5a, 5b).

3. A floor panel system (10) according to any one of the preceding claims, wherein said first and said fourth locking portions (21, 24) on said first and said second floor panels (5, 5a, 5b) are arranged close to said top surface (20) and said second and said third locking portions (21) on said first and said second floor panels (5, 5a, 5b) are arranged close to a bottom surface of said floor panel (5, 5a, 5b), arranged parallel and at distance to said top surface (20) of said floor panel (5, 5a, 5b).

4. A floor panel system (10) according to claim 1 or 2, wherein said second and said third locking portions (22, 23) on said first and said second floor panels (5, 5a, 5b) are arranged close to said top surface (20) and said first and said fourth locking portions (21, 24) on said first and said second floor panels (5, 5a, 5b) are arranged close to a bottom surface of said floor panel (5, 5a, 5b), arranged parallel and at distance to said top surface (22) of said floor panel (5, 5a, 5b).

5. A floor panel system (10) according to claim 3 or 4, wherein at least said first floor panel (5, 5a, 5b) comprises two first locking portions (21) at said first lateral side (26), and said second locking portion (22) is arranged between said two first locking portions (21), wherein the second locking (22) portion defines a recess which extends from said top surface (20) or said bottom surface to said second locking portion (22) between said two first locking portions (21), wherein said recess being adapted to receive said fourth locking portion (24) of said second floor panel interlocking said first and second floor panels to each other, along a third axis (43) perpendicular to said first axis (41) and said second axis (42).

6. A floor panel system (10) according to any one of the claims 3-5, wherein at least said first floor panel (5, 5a, 5b) comprises two fourth locking portions (24) at said second lateral side (25), and said third locking portion (23) is arranged between said two fourth locking portions (24) wherein the third locking portion (23) defines a recess which extends from said top surface (20) or said bottom surface to said third locking portion (23) between said two fourth locking portions (24), wherein said recess being adapted to receive said first locking portion (21) of said first floor panel (5, 5a) interlocking said first and second floor panels (5, 5a, 5b) to each other, along a third axis (43) perpendicular to said first axis (41) and said second axis (42).

7. A floor panel system (10) according to claim 3-6, wherein at least said first floor panel (5, 5a, 5b) comprises two second locking portions (22) at said first lateral side (26), and said first locking portion (21) is arranged between said two second locking portions (22), wherein the first locking portion (21) defines a recess, which extends from said top surface (20) or said bottom portion to said first locking portion (21) between said two second locking portions (22), wherein said recess being adapted to receive said third locking portion (23) of said second floor panel interlocking said first and second floor panels (5, 5a, 5b) to each other, along a third axis (43) perpendicular to said first axis (41) and said second axis (42).

8. A floor panel system (10) according to claim 3-7, wherein at least said first floor panel (5, 5a, 5b) comprises two third locking portions (21) at said second lateral side (25), and said fourth locking portion (24) is arranged between said two third locking portions (23), wherein the fourth locking portion (24) defines a recess, which extends from said top surface (20) or said bottom portion to said fourth locking portion (24) between said two third locking portions (23), wherein said recess being adapted to receive said second locking portion (22) of said second floor panel (5, 5b) interlocking said first and second floor panels (5, 5a, 5b) to each other, along a third axis (43) perpendicular to said first axis (41) and said second axis (42).

9. A floor panel system (10) according to any preceding claim, wherein several first and second locking portions (21, 22) of at least one floor panel (5, 5a, 5b) are alternately disposed along said first lateral side (26) of said floor panel (5, 5a, 5b) and wherein several third and fourth locking portions (23, 24) are alternately disposed along said second lateral side (25) of said floor panel (5, 5a, 5b).

10. A floor panel system (10) according to claim 3 and 5-9 in combination with claim 3, wherein said locking element (32) on said first locking portion (21) of said at least one floor panel (5, 5a, 5b) is a protrusion which extends in a direction towards said bottom surface of said at least one floor panel (5, 5a, 5b).

11. A floor panel system according to claim 10, wherein said protrusion has an outer shape which is matching with the shape of the locking groove (35) it is adapted to engage with and said protrusion has a cross-section which is wedge shaped.

12. A floor panel system (10) according to claim 11, wherein said looking groove (35) of at least said second floor panel (5, 5a, 5b) comprises stop surfaces (33) which said locking element (32) of at least said first floor panel abuts during use and interlocks said first and second floor panels (5, 5a, 5b) to each other, along a third axis (43) perpendicular to said first axis (41) and said second axis (42).

13. A floor panel system (10) according to any preceding claim, wherein said first and said second locking portions (21, 22) of at least one floor panel (5, 5a, 5b) are arranged at a distance from each other or said third and said fourth locking portions (23, 24) arranged at a distance from each other.

14. A floor panel system (10) according to any preceding claim, wherein said first and said second locking portion (21, 22) of at least one floor panel (5, 5a, 5b) are connected to each other at their adjacent sides and/or said third and said fourth locking portions (23, 24) are connected to each other at their adjacent sides.

15. A floor panel system (10) according to any preceding claim, wherein each floor panel (5, 5a, 5b) is molded from one material.
